# FASCICULE DE BREVET EUROPEEN

(11) **EP 2 893 693 B1**
(45) Date de publication et mention de la délivrance du brevet: **02.10.2019**
(21) Numéro de dépôt: 13759503.9
(22) Date de dépôt: 06.09.2013
(51) Int. Cl.: H04M 1/725, H04L 12/28

(54) **UNITÉ NOMADE DE COMMANDE DES CONDITIONS DE CONFORT ET/OU DE SÉCURITÉ DANS UN BÂTIMENT**
MOBILE EINHEIT ZUR STEUERUNG DES KOMFORTS UND/ODER DER SICHERHEITSBEDINGUNGEN IN EINEM GEBÄUDE
MOBILE UNIT FOR CONTROLLING THE COMFORT AND/OR SECURITY CONDITIONS IN A BUILDING

(30) Priorité: 06.09.2012 FR 1258346
(43) Date de publication de la demande: 15.07.2015
(73) Titulaire: SOMFY ACTIVITES SA, 74300 Cluses (FR)
(72) Inventeur: MIGNOT, Pierre, F-05380 Chateauroux-les-Alpes (FR)
(74) Mandataire: Novaimo
(86) Numéro de dépôt international: PCT/EP2013/068464
(87) Numéro de publication internationale: WO 2014/037499

(56) Documents cités:
- EP-A2- 2 071 731
- WO-A1-2007/114716
- WO-A2-99/17477
- US-A1- 2002 069 276
- US-B1- 6 990 335

## Description

La présente invention se rapporte au domaine de la commande des équipements de sécurité et/ou de confort dans un bâtiment. Elle concerne en particulier une unité de commande des équipements électriques du bâtiment et un procédé de fonctionnement de l'unité de commande dans une installation pour le contrôle automatisé des dispositifs pilotant ces équipements.

La multiplication des fonctionnalités proposées par les équipements électriques du bâtiment, et la multiplication des produits à commander, sont à l'origine de l'existence d'unités de commande présentant des interfaces utilisateur d'une grande complexité. Ceci a pour conséquence pour les utilisateurs un temps d'apprentissage long avant d'arriver à mettre en oeuvre de manière optimisée les différentes fonctionnalités. Certaines unités de commande peuvent piloter les équipements électriques selon des scénarii complexes enregistrés dans les mémoires des unités de commande.

Les unités de commande et les dispositifs de communication pilotant les équipements électriques forment un réseau local au bâtiment, et communiquent au sein de ce réseau par l'intermédiaire des protocoles de communication locaux. Cette communication est limitée par la portée des éléments de communication utilisés. Une fois l'unité de commande éloignée du bâtiment, le pilotage des équipements électriques par la même unité de commande n'est plus possible. Un utilisateur ne pourra plus bénéficier de sa connaissance de l'ergonomie de l'unité de commande et le pilotage automatique grâce aux scénarii enregistrés dans les mémoires de l'unité de commande n'est plus possible.

La présente invention propose une unité de commande et un procédé de fonctionnement permettant de remédier à ces inconvénients.

On connaît de l'art antérieur des inventions proposant des dispositifs, tels que des téléphones mobiles ou des tablettes multimédia, permettant de développer des applications spécifiques pour piloter les équipements électriques du bâtiment.

Cette solution revient à dupliquer les efforts d'apprentissage pour un utilisateur et l'effort de développement, de test et d'intégration pour la programmation des scénarii de pilotage.

Ces dispositifs, munis de moyens de communication selon des protocoles normalisés, tels que Bluetooth, 802.11, etc, ne sont pas adaptés à communiquer selon des protocoles propriétaires qui peuvent varier d'un réseau domotique à un autre. Qu'ils soient éloignés ou à portée des équipements électriques avec lesquels ils doivent communiquer, ces dispositifs ont systématiquement besoin d'un ou plusieurs équipements supplémentaires pour « traduire » les messages envoyés selon le protocole normalisé en messages conformes au protocole propriétaire spécifique à l'installation domotique. Dans le cas d'une utilisation au sein de l'installation, à proximité des équipements électriques, une telle opération engendre une consommation d'énergie supplémentaire et un encombrement de l'environnement radio. Une autre solution connue est de munir les équipements électriques de moyens de communication selon les protocoles normalisés, ce qui entraine une augmentation du coût de l'installation et du coût d'exploitation si les protocoles normalisés sont payants (type carte SIM).

Selon un premier aspect, l'invention concerne une unité de commande nomade, destinée à être utilisée dans une installation pour le contrôle automatisé des conditions de confort et/ou de sécurité dans un bâtiment. L'installation comprend au moins un équipement électrique adapté à la communication selon un premier protocole de communication, dit protocole local.

Selon l'invention, l'unité de commande nomade comprend :
- des premiers éléments de communication adaptés à la communication selon le protocole local ;
- des deuxièmes éléments de communication adaptés à la communication selon un deuxième protocole de communication, dit protocole distant, permettant l'accès vers un réseau externe ;
- des éléments de détection d'au moins un événement impliquant l'envoi d'au moins un message à destination d'au moins un équipement électrique ;
- des éléments de sélection automatique des éléments de communication à utiliser pour l'envoi de l'au moins un message ;
- des éléments de génération de l'au moins un message en fonction de l'événement détecté et des éléments de communication sélectionnés, ledit au moins un message étant configuré pour être reçu par ledit au moins un équipement conformément au protocole local, quel que soit le protocole de communication utilisé par l'unité de commande.

L'installation ne fait pas partie de l'unité de commande nomade.

Une telle unité de commande communique avec les équipements électriques du bâtiment, quelle que soit sa position, à proximité des équipements électriques à commander, selon le protocole local, ou à distance, selon le protocole distant, tout en bénéficiant d'une interface utilisateur unique et permettant l'utilisation des scénarii existants sans reprogrammation de ceux-ci, et permettant une optimisation des transmissions. L'unité de commande selon l'invention peut réagir aux différents événements et envoyer des messages vers les équipements électriques, d'une seule manière du point de vue d'un utilisateur. Ceci est possible grâce aux deux éléments de communication disponibles et à la sélection automatique des éléments de communication utilisés pour l'envoi des messages. La sélection automatique est réalisée par l'unité de commande. La sélection automatique est réalisée de manière transparente pour l'utilisateur ou sans intervention de l'utilisateur. Cette fonctionnalité rend l'unité de commande 'nomade', pouvant fonctionner même si elle est déplacée loin des équipements électriques à commander. Il est important de noter qu'entre deux envois de messages, l'unité de commande peut changer automatiquement d'éléments et de protocole de communication.

Corrélativement, l'invention concerne une installation pour le contrôle automatisé des conditions et/ou de la sécurité dans un bâtiment, comprenant une unité de commande nomade selon l'invention et au moins un équipement électrique adapté à communiquer selon le protocole local.

Avantageusement, dans une telle installation, les premiers et deuxièmes éléments de communication de l'unité de commande permettent l'établissement des connexions entre les différents équipements électriques de l'installation et un réseau informatique externe. L'accès au réseau externe est fait à partir d'un élément appartenant à l'installation, contrairement aux solutions existantes.

L'invention concerne aussi un procédé de fonctionnement dans une installation telle que mentionnée, le procédé étant mis en oeuvre par l'unité de commande nomade, c'est-à-dire un procédé de fonctionnement de l'unité de commande nomade. Le procédé comprend :
- une étape de détection d'au moins un événement impliquant l'envoi d'au moins un message à destination d'au moins un équipement électrique de l'installation ;
- une étape de sélection automatique des éléments de communication à utiliser pour l'envoi de l'au moins un message à destination de l'au moins un équipement électrique ;
- une étape de génération de l'au moins un message en fonction de l'événement détecté et des éléments de communication sélectionnés pour l'envoi du message ;
- une étape d'envoi de l'au moins un message par l'intermédiaire des éléments de communication sélectionnés, ledit au moins un message étant configuré pour être reçu par ledit au moins un équipement conformément au protocole local, quel que soit le protocole de communication utilisé par l'unité de commande.

Dans un mode de réalisation, l'unité de commande nomade peut comprendre des éléments pour la détermination d'au moins une action à exécuter par l'au moins un équipement électrique, en fonction de l'événement détecté. Ainsi, une unité de commande « intelligente » peut interpréter les événements détectés et déduire des commandes à envoyer aux équipements électriques pour déclencher l'exécution par les équipements électriques des actions souhaitées.

L'unité de commande peut comprendre des éléments d'interface homme-machine, permettant à un utilisateur de sélectionner des commandes à envoyer à l'au moins un équipement électrique. Ce mode de réalisation, particulièrement avantageux pour les unités de commande complexes et/ou ayant des ergonomies personnalisées, permet à un utilisateur, familier d'une ergonomie, d'envoyer les commandes manuelles de la même manière, quel que soit l'endroit où il se trouve et quel que soit le protocole utilisé.

Dans un mode de réalisation, les éléments de sélection automatique des éléments de communication, peuvent comprendre des éléments de géo-localisation.

Une installation selon l'invention peut comprendre un dispositif passerelle de communications comprenant des éléments de communication adaptés au protocole local, des éléments de communication adaptés à un troisième protocole de communication permettant l'accès au réseau externe, et des éléments de conversion des données reçues conformément au troisième protocole de communication dans un format compatible avec le protocole local.

Avantageusement, la présence de la passerelle de communications permet l'acheminement des messages depuis l'unité de commande vers les équipements électriques et inversement, quelle que soit la position de l'unité de commande par rapport à l'installation. En effet, si l'unité de commande et les équipements se trouvent hors portée d'une communication selon le protocole local, les deuxièmes éléments de communications, le réseau externe et la passerelle permettent un autre routage des messages entre l'unité de commande et les équipements électriques. Ainsi, le réseau d'équipements électrique devient nomade.

L'installation peut comprendre en outre un dispositif d'accès au réseau externe, adapté à communiquer avec l'unité de commande selon le protocole distant.

Dans un mode de réalisation, le procédé de fonctionnement peut comprendre une étape de détermination d'au moins une action à exécuter par l'au moins un équipement électrique, en fonction de l'événement détecté.

Le procédé de fonctionnement peut comprendre une étape de réception d'un message de compte-rendu contenant des informations relatives au résultat de la réception de l'au moins un message par l'au moins un équipement électrique.

Ainsi, connaissant le résultat de la réception d'un message, l'unité de commande peut déterminer, sans intervention de l'utilisateur, la suite à donner : réémettre le message, afficher des informations, générer d'autres messages à destination des équipements électriques de l'installation, ou simplement attendre des nouveaux événements.

Le procédé de fonctionnement peut comprendre une étape de sélection automatique des éléments de réception du message de compte-rendu. Avantageusement, la sélection automatique des éléments de réception permet de recevoir, de manière transparente pour l'utilisateur, des comptes rendus de réception, quel que soit l'éloignement de l'unité de commande par rapport à l'installation. Il est à noter que cet éloignement peut changer entre le moment de l'émission d'un message et celui de la réception du compte-rendu associé à ce message.

Dans un mode de réalisation, les éléments de réception du message de compte-rendu, sont les éléments de communication sélectionnés pour l'envoi du message.

Dans un mode de réalisation, l'étape de sélection automatique comprend une sous-étape d'essai de connexion utilisant le protocole local, en vue d'établissement d'une communication directe avec l'au moins un équipement électrique, les éléments de communication sélectionnés étant
- les premiers éléments de communication en cas de réussite de l'établissement de la communication directe ;
- les deuxièmes éléments de communication, en cas d'échec de l'établissement de la communication directe.

Dans un autre mode de réalisation, l'étape de sélection automatique comprend une sous-étape de géo-localisation de l'unité de commande nomade, les éléments de communication sélectionnés étant
- les premiers éléments de communication si l'unité de commande est localisée dans un périmètre prédéfini ;
- les deuxièmes éléments de communication, dans le cas contraire.

Dans un mode de réalisation, l'étape de détection de l'au moins un événement comprend la détection d'au moins une action utilisateur exécutée par l'intermédiaire d'une interface homme-machine. Avantageusement, ce mode de réalisation permet à l'utilisateur de bénéficier de son apprentissage de l'ergonomie de l'unité de commande, quelle que soit la position de l'unité de commande.

Dans un autre mode de réalisation, l'étape de détection de l'au moins un événement comprend la détection de l'arrivée à échéance d'au moins une action à exécuter conformément à un scénario prédéfini. Ce mode de réalisation permet d'exploiter les scénarii embarqués, quelle que soit la position de l'unité de commande. Ainsi le fonctionnement de l'installation est le même, sans nécessiter une duplication des scénarii sur un autre dispositif de commande.

Dans un autre mode de réalisation, l'étape de détection de l'au moins un événement comprend la réception par l'intermédiaire des éléments de communication, des données concernant le fonctionnement d'au moins un équipement électrique. Avantageusement, l'unité de commande peut recevoir des informations concernant un événement détecté par les autres éléments de l'installation, ou des consignes de fonctionnement envoyés par un serveur distant.

Dans un mode de réalisation, l'action à exécuter par l'au moins un équipement électrique consiste à actualiser ses paramètres de configuration. Le procédé de fonctionnement mis en oeuvre par l'unité de commande, comprend dans ce cas:
- une étape de génération d'un message de requête de paramètres de configuration, à destination d'un serveur distant, dans un format compatible avec le protocole distant ;
- une étape de transmission du message de requête par l'intermédiaire des deuxièmes éléments de communication ;
- une étape de réception depuis le serveur distant d'un message contenant des paramètres de configuration, par l'intermédiaire des deuxièmes éléments de communication ;
- l'une étape de conversion du contenu du message reçu conformément au protocole distant dans un message de réponse compatible avec le protocole local.

Dans un mode de réalisation du procédé de fonctionnement, les données reçues par l'intermédiaire des deuxièmes éléments de communication, sont relatives à un dispositif permettant l'accès vers le réseau externe, et le message à envoyer à l'au moins un équipement électrique contient une commande pour déclencher une action de l'équipement électrique, en fonction des données reçues. Avantageusement, cette caractéristique permet à l'unité de commande de notifier à un utilisateur des événements concernant le dispositif d'accès, selon une correspondance prédéfinie entre les événements concernant le dispositif d'accès d'une part, et les commandes à envoyer par l'unité de commande, ainsi que les équipements électriques destinataires de ces commandes d'une autre part.

L'invention concerne aussi un procédé de communication dans une installation conforme à l'invention, le procédé étant mis en oeuvre par un dispositif d'accès au réseau externe, adapté à communiquer avec l'unité de commande selon le protocole distant. Ce procédé comprend
- une étape de génération des données relatives au dispositif d'accès ;
- une étape d'envoi de ces données par l'intermédiaire des deuxièmes éléments de communication, à destination de l'unité de commande U_CMD.

Avantageusement, le dispositif d'accès peut signaler des événements le concernant, par l'intermédiaire des équipements électriques du réseau, et ceci sans utiliser des éléments de communication spécifiques à l'installation.

Ce procédé de communication peut-être vu comme un procédé de fonctionnement du dispositif d'accès.

L'invention concerne aussi un programme d'ordinateur comportant des instructions adaptées à la mise en oeuvre des étapes du procédé de fonctionnement selon l'invention.

L'invention vise aussi un support d'informations lisible par un ordinateur, et comportant des instructions d'un programme d'ordinateur tel que mentionné ci-dessus.

D'autres caractéristiques et avantages de la présente invention ressortiront de la description faite ci-dessous, en référence aux figures qui illustrent des exemples de réalisation dépourvus de tout caractère limitatif.
La figure 1 illustre une installation conforme à l'invention. Des éléments optionnels sont représentés en trait pointillé.
La figure 2 représente une unité de commande selon l'invention.
La figure 3 représente sous forme d'organigramme les principales étapes d'un procédé de communication selon un mode de réalisation de l'invention. Des étapes optionnelles sont représentées en trait pointillé.
La figure 4 illustre les principales sous-étapes d'une étape de génération d'un message, pouvant être mise en oeuvre dans un mode particulier de réalisation de l'invention.
Les figures 5a, 5b, 5c et 5d illustrent les principales sous-étapes d'une étape de sélection automatique des éléments de communication, selon des modes particuliers de réalisation de l'invention.

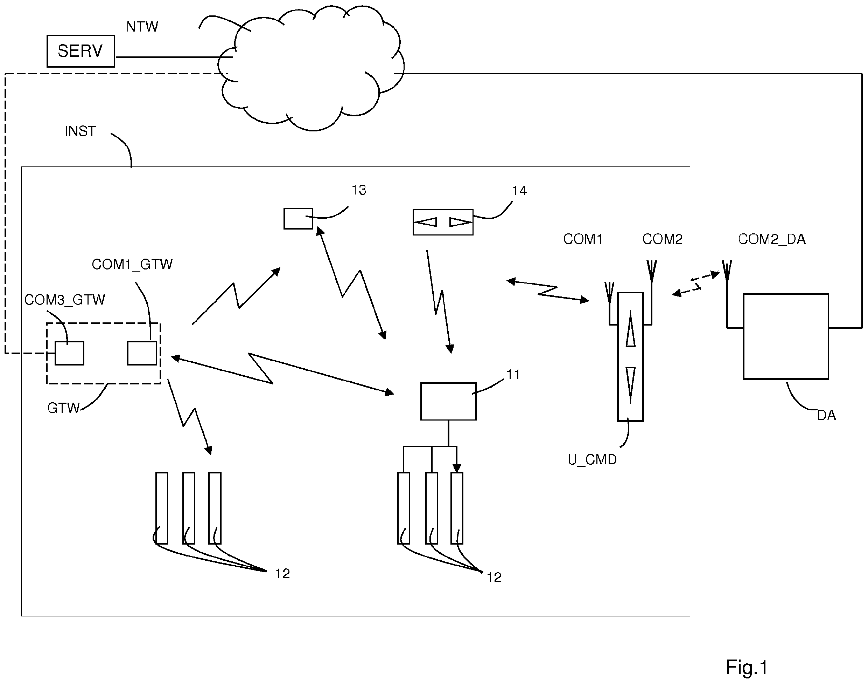

Un premier mode de réalisation sera maintenant décrit en référence aux figures 1, 2 et 3.

La figure 1 représente une installation INST selon l'invention. Cette installation comprend des équipements 12 pour le contrôle automatisé des conditions de confort et/ou de sécurité dans un bâtiment, des unités pour le contrôle automatique de ces équipements 11, des capteurs 13 (tels que des capteurs de luminosité, de température, de vent), des unités 14 de commande manuelle des équipements. L'installation peut aussi comprendre un dispositif passerelle de communications GTW, dont le rôle sera décrit dans la suite de ce document.

Les équipements 12 pour le contrôle automatisé des conditions de confort et/ou de sécurité dans un bâtiment peuvent être des écrans, par exemple des stores d'intérieur ou d'extérieur, des portes et portails, des équipements de chauffage, de climatisation, d'éclairage, des alarmes.

Dans la suite de ce document, les équipements 12 pour le contrôle automatisé des conditions de confort et/ou de sécurité dans un bâtiment, les unités de commande 11 et 14, les capteurs 13 et le dispositif passerelle de communications GTW seront désignés par le terme générique équipements électriques.

Au sein de l'installation INST les équipements électriques communiquent entre eux en utilisant un premier protocole de communication P1, dit protocole local. Les messages échangés entre les différents équipements peuvent être transmis directement, ou relayés par un élément intermédiaire appartenant à l'installation ; dans tous les cas le protocole utilisé est le même, permettant ainsi l'utilisation des mêmes moyens de communications d'émission/réception et de la même pile de protocole, quel que soit l'acheminement d'un message. Certains équipements électriques peuvent être seulement émetteurs, d'autres seulement récepteurs, et d'autres émetteurs-récepteurs.

Ce protocole local peut comprendre l'utilisation d'un identifiant de l'installation INST, dit « clé maison », partagé par tous les équipements électriques de l'installation. Cette clé, stockée dans chaque équipement lors de la mise en service de l'installation ou de l'ajout d'un nouveau équipement, assure la sécurité des échanges. Seuls les équipements munis d'une même « clé maison » sont autorisés à communiquer entre eux.

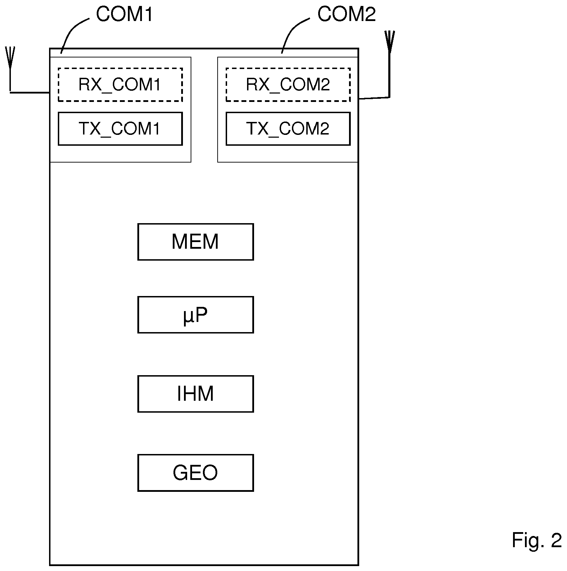

L'installation INST comprend une unité de commande nomade U_CMD selon l'invention, représentée notamment en figure 2. Cette unité de commande U_CMD comprend des premiers éléments de communication COM1 adaptés au protocole local P1, pouvant ainsi communiquer avec les équipements électriques 11, 12, 13, 14, GTW, au sein de l'installation INST selon ce protocole local. Les échanges peuvent être effectués avec les équipements 12 pour le contrôle automatisé des conditions de confort et de sécurité, pour envoyer des messages de commande ; avec les capteurs 13, pour obtenir les résultats des détections ; avec d'autres unités de commande 11, 14, pour échanger des messages de maintenance ou de configuration ; avec le dispositif passerelle GTW, par exemple lors de la mise en service de cette passerelle.

L'unité de commande U_CMD, appartenant à l'installation INST est munie de la « clé maison ».

L'unité de commande U_CMD comprend aussi des deuxièmes éléments de communication COM2 adaptés à un deuxième protocole de communication P2 permettant l'accès à un réseau informatique externe NTW, dit protocole distant. Ce protocole est de préférence un protocole répandu et mis en oeuvre par un nombre important de terminaux communicants, tel que des téléphones mobiles, des ordinateurs, des tablettes multimédia. Le protocole distant peut être filaire, par exemple un lien USB, UART, ou non filaire, par exemple Bluetooth, Wifi, GPRS, UMTS, etc.

De manière générale, l'unité de commande nomade U_CMD, munie des deuxièmes éléments de communication COM2, peut établir une communication avec un terminal communicant. Selon des procédés connus, certains terminaux communicants mettent en oeuvre des applications de type « point d'accès », fournissant aux dispositifs connectés un service d'accès vers un réseau externe NTW. Il est important de noter que de telles applications « points d'accès » ne sont pas spécifiques à l'installation. Dans la suite de ce document, un tel terminal communicant, mettant en oeuvre une application de type « point d'accès », sera appelé dispositif d'accès DA.

Ainsi, l'unité de commande peut accéder à un réseau externe NTW par l'intermédiaire du dispositif d'accès DA, et établir une communication avec un serveur externe SERV, pour échanger des données concernant le fonctionnement de l'installation INST et des équipements électriques.

L'unité de commande U_CMD comprend aussi
- des éléments IHM, MEM, Rx_COM2, Rx_COM1 pour la détection d'au moins un événement EVT impliquant l'envoi d'au moins un message MSG à destination d'au moins un équipement électrique 11, 12, 13, 14, GTW ;
- des éléments µP, MEM, COM1, COM2, IHM, GEO, pour la sélection automatique des éléments de communication COM_TX, à utiliser pour l'envoi des messages MSG ;
- des éléments µP, MEM, COM1, COM2 pour la génération de l'au moins un message MSG en fonction de l'événement EVT détecté et des éléments de communication sélectionnés COM_TX.

Typiquement, le contenu applicatif d'un message MSG sera déterminé en fonction de l'événement EVT détecté, et le format de trame en fonction des éléments de communication COM_TX, sélectionnés pour l'émission. Selon les différents protocoles utilisés, plusieurs messages peuvent être groupés dans une même trame, ou un seul message peut être envoyé par trame. Ainsi, un même événement EVT impliquant l'envoi des trois messages peut par exemple déclencher l'envoi d'une seule trame contenant les trois messages si les deuxièmes éléments de communication COM2 sont sélectionnés, ou l'envoi de trois trames, contenant chacune un message, si les premiers éléments de communication COM1 sont sélectionnés.

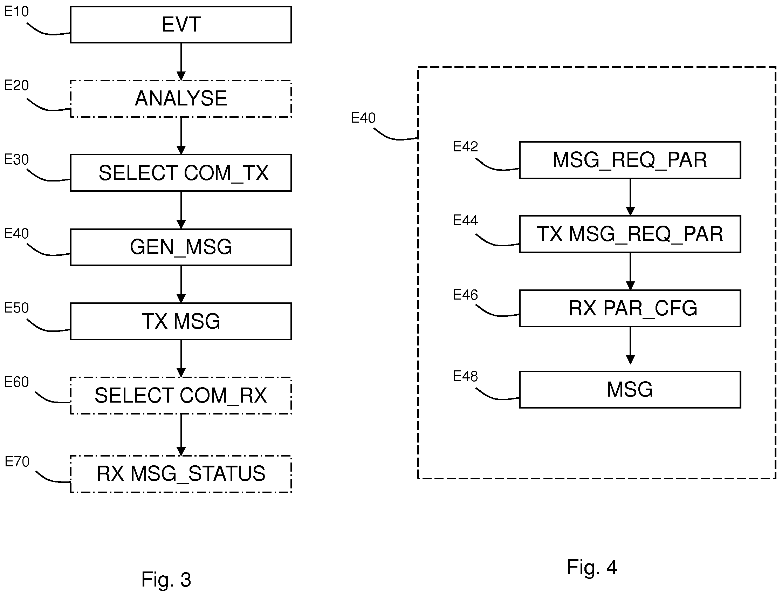

Nous allons maintenant décrire, en référence à la figure 3, les principales étapes d'un procédé de communication selon un mode de réalisation de l'invention.

Ce mode de réalisation est mis en oeuvre dans une installation INST comprenant un dispositif passerelle de communications GTW. Ce dispositif passerelle GTW comprend
- des éléments COM1_GTW de communication, adaptés au protocole local P1 ;
- des éléments COM3_GTW de communication, adaptés à un troisième protocole de communication IP permettant l'accès au réseau NTW externe; et
- des éléments de conversion des données reçues conformément au troisième protocole de communication IP dans un format compatible avec le protocole local P1.

Un tel dispositif est présent dans l'installation domotique pour permettre la communication avec des serveurs distants, par exemple pour le téléchargement des paramètres de configuration de l'installation ou des équipements individuels, pour la maintenance ou contrôle à distance depuis ce serveur. Pour réaliser ces fonctions, le dispositif passerelle de communications GTW met en oeuvre des procédés connus de conversion entre le protocole local et le protocole de communication IP permettant l'accès au réseau NTW externe.

L'unité de commande détecte, lors d'une étape E10, au moins un événement EVT impliquant l'envoi d'au moins un message MSG à destination d'au moins un équipement électrique 11, 12, 13, 14 de l'installation INST.

Un tel événement EVT peut être constitué par une action de l'utilisateur sur l'interface homme-machine IHM. Cette interface peut, de façon connue, comprendre des touches de clavier dédiées, ou un écran tactile, permettant une visualisation sous forme d'icônes spécifiques des ordres, ou encore un capteur de mouvement.

Ensuite, l'unité de commande U_CMD peut, dans une étape optionnelle E20, déterminer au moins une action à exécuter par l'au moins un équipement électrique 11, 12, 13, 14, GTW.

De manière avantageuse, l'unité de commande prend en charge la génération des messages en fonction des événements détectés. Ainsi, des changements des conditions de fonctionnement détectés ou communiqués à l'unité de commande, entraînent l'exécution des actions par les équipements électriques. En effet, l'unité de commande interprète les événements, déduit les actions souhaitées, et génère des messages vers les équipements concernés. Cette caractéristique est particulièrement avantageuse, car elle permet aux équipements qui ne peuvent pas communiquer directement avec un capteur, ou avec d'autres sources d'informations, de s'adapter aux changements détectés par d'autres équipements de l'installation, ou par l'unité de commande. Le fonctionnement des équipements s'adapte, mais ceci ne nécessite pas d'intervention sur les équipements. En effet, ils continuent d'exécuter des actions en fonction des messages reçus, et c'est l'unité de commande qui assure la génération et l'envoi des messages.

Ensuite, lors d'une étape E30, l'unité de commande U_CMD effectue une sélection automatique des éléments de communication COM_TX à utiliser pour l'envoi du message MSG à destination de l'équipement électrique 11, 12, 13, 14, GTW.

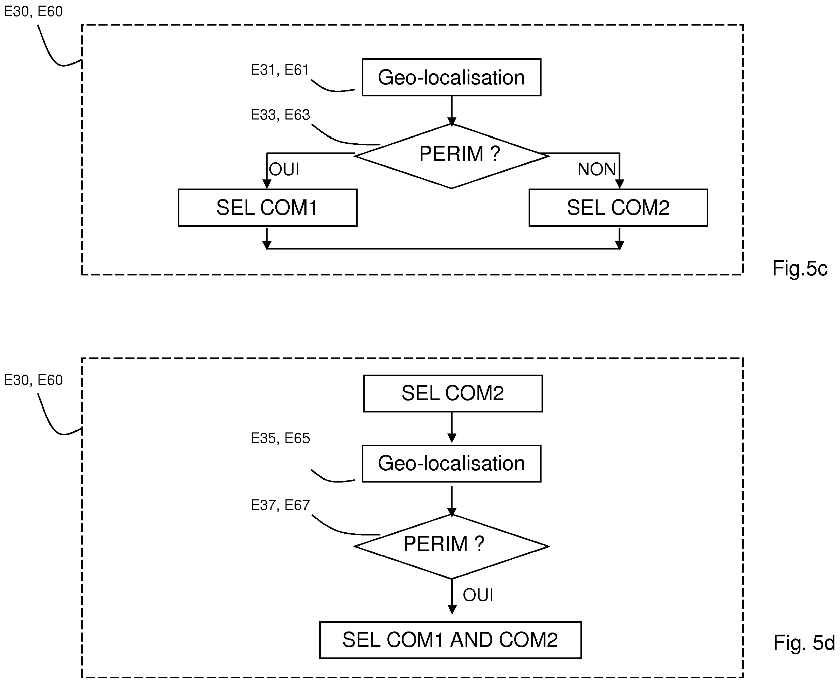

Un mode de sélection automatique, basé sur la géo-localisation de l'unité de commande U_CMD, est illustré par la figure 5c.

L'unité de commande détermine, lors d'une sous-étape E31, sa localisation par rapport à un périmètre PERIM prédéfini en fonction de la localisation de l'installation INST et de la portée des premiers éléments de communication COM1. A l'intérieur de ce périmètre PERIM, l'unité de commande U_CMD se trouvant à portée des premiers éléments de communication COM1, peut communiquer selon le protocole local P1.

Le résultat de la géo-localisation est analysé au cours d'une étape E33, et l'unité de commande U_CMD sélectionne les premiers éléments de communication COM1 si elle est localisée dans le périmètre prédéfini PERIM, et les deuxièmes éléments de communication COM2 dans le cas contraire.

L'unité de commande peut obtenir ces informations par des éléments de géo-localisation faisant partie de l'unité de commande ; alternativement, ces informations peuvent être reçues par l'intermédiaire des deuxièmes éléments de communication COM2, depuis un dispositif externe, tel un téléphone mobile.

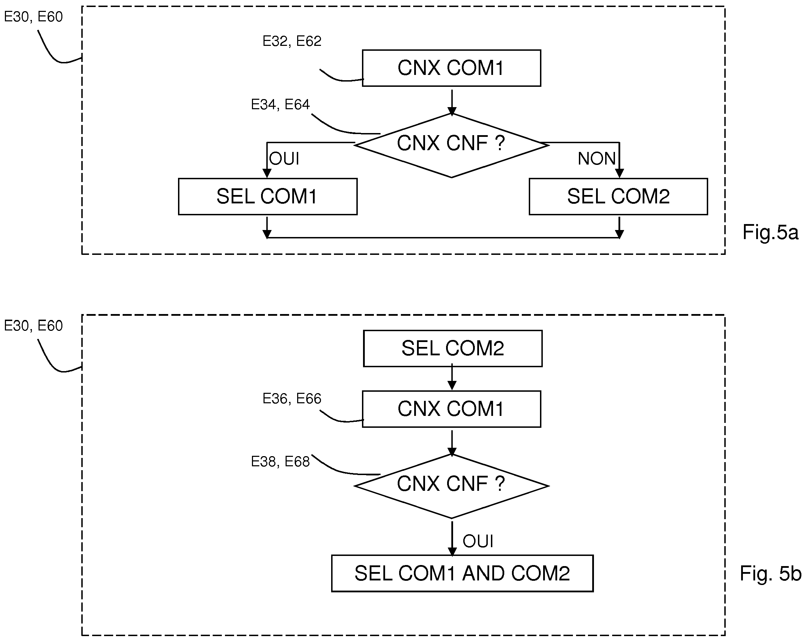

Un autre mode de sélection automatique, basé sur l'établissement d'une communication directe avec les équipements électriques 11, 12, 13, 14, GTW sera maintenant décrit en référence à la figure 5a.

La sélection des éléments de communication basée sur une confirmation de l'établissement de la connexion est particulièrement fiable. Au sens de l'invention, une communication directe utilise le protocole local P1 et les premiers éléments de communication COM1 pour l'émission d'un message par l'unité de commande U_CMD vers les équipements électriques 11, 12, 13, 14, GTW. Comme il sera expliqué dans la suite du document, la réussite de l'établissement de la communication directe peut consister en un message reçu par l'unité de commande U_CMD par l'intermédiaire des premiers ou des deuxièmes éléments de communication.

Lors d'une sous-étape E32, l'unité de commande U_CMD essaie d'établir une communication directe avec l'équipement électrique concerné. Les éléments de communication sont sélectionnés en fonction du résultat de l'établissement de la communication directe, analysé lors d'une sous-étape E34. Ainsi, les premiers éléments de communication COM1 sont sélectionnés en cas de réussite, et les deuxièmes éléments de communication COM2, en cas d'échec de l'établissement de la communication directe.

Au cours de la sous-étape E32, l'unité de commande U_CMD peut envoyer, en vue d'établissement de la communication directe utilisant le protocole local P1, un message explicite de requête de connexion. Cette requête peut être effectuée par exemple au niveau de la couche de liaison de données, ou au niveau de la couche transport de données, dans un mode de réalisation utilisant une couche transport de données en mode dit « connecté », tel que TCP dans le protocole internet. La réception d'un message de confirmation de connexion est interprétée comme une réussite de l'établissement de la communication directe, et en conséquence, au cours de la sous-étape E34, les premiers éléments de communication COM1 sont sélectionnés par l'unité de commande U_CMD pour l'envoi du message MSG à destination de l'équipement électrique 11, 12, 13, 14, GTW.

Si aucun message de confirmation de connexion n'est reçu, l'établissement de la communication directe est considéré comme manqué, et en conséquence, au cours de la sous-étape E34, les deuxièmes éléments de communication COM2 sont sélectionnés par l'unité de commande U_CMD pour l'envoi des messages MSG vers les équipements électriques 11, 12, 13, 14, GTW.

Alternativement, au cours de la sous-étape E32, l'unité de commande U_CMD peut envoyer par l'intermédiaire des premiers éléments de communication COM1 directement le message MSG, suite à la détection de l'événement EVT. Ainsi, l'essai de connexion utilisant le protocole local P1 se fait de manière implicite.

Si l'unité de commande U_CMD reçoit un message de compte-rendu MSG_STATUS émis par l'équipement électrique 11, 12, 13, 14, GTW destinataire du message MSG, l'établissement de la communication directe est considéré comme réussi, et en conséquence, au cours de la sous-étape E34, les premiers éléments de communication COM1 sont sélectionnés par l'unité de commande U_CMD. Dans le cas contraire, l'établissement de la communication directe est considéré comme manqué, et les deuxièmes éléments de communication COM2 sont sélectionnés par l'unité de commande U_CMD pour l'envoi des messages MSG vers les équipements électriques 11, 12, 13, 14, GTW.

Si le protocole local est bidirectionnel, la réception du message de confirmation de connexion ou du message de compte-rendu MSG_STATUS attendu suite à l'envoi du message MSG, peut se faire par l'intermédiaire des premiers éléments de communication COM1.

Si le protocole local est monodirectionnel, ou si les équipements électriques 11, 12, 13, 14, sont seulement aptes à recevoir des messages selon ce protocole local, l'établissement de la communication directe peut être confirmé par un dispositif d'analyse distinct des équipements électriques destinataires des messages.

Ce dispositif d'analyse, apte à recevoir des messages selon le protocole local P1, est placé dans des conditions de réception similaires aux conditions de réception des équipements électriques 11, 12, 13, 14, destinataires des messages envoyés par l'unité de commande U_CMD.

Lors de l'émission d'un message MSG par l'unité de commande U_CMD vers un ou plusieurs équipements électriques, conformément au protocole local P1, le dispositif d'analyse estime la probabilité de bonne réception des messages par leurs destinataires, en se basant sur ses propres conditions de réception de ces mêmes messages.

Le résultat de cette estimation est ensuite envoyé à l'unité de commande U_CMD. Les éléments de communication utilisés par l'unité de commande U_CMD pour recevoir le résultat de l'estimation peuvent être les premiers éléments ou les deuxièmes éléments de communication COM1, COM2, ou d'autres éléments, spécifiques à une communication entre le dispositif d'analyse et l'unité de commande U_CMD.

Une sélection des éléments de communication COM1, COM2 en exclusivité mutuelle, en fonction du résultat de l'essai d'établissement d'une communication directe par l'intermédiaire des premiers éléments de communication COM1 présente l'avantage de l'optimisation des ressources de l'unité de commande U_CMD et d'autres dispositifs de l'installation INST, en temps de calcul et en énergie consommée.

Quel que soit le mode de sélection automatique utilisé, l'unité de commande comprend les moyens matériels et logiciels pour effectuer elle-même cette sélection des éléments de communication COM_TX à utiliser pour l'envoi des messages MSG à destination des équipements électriques de l'installation INST.

Même dans les cas où une interaction avec un autre élément de l'installation est à effectuer, cet autre élément fonctionne selon son mode de fonctionnement normal, sans nécessiter une adaptation pour participer à la sélection automatique. Ainsi, un équipement électrique 11, 12, 13, 14 fonctionne selon le protocole local de l'installation.

Dans le cas particulier du dispositif passerelle de communications GTW, le rôle de conversion entre le protocole local et le protocole de communication IP permettant l'accès au réseau NTW externe reste le même, c'est-à-dire un message reçu depuis le réseau externe NTW sera décodé et ensuite encodé selon le protocole local et envoyé à l'équipement électrique destinataire ; un message reçu depuis un équipement électrique de l'installation selon le protocole local est décodé et encodé ensuite selon le troisième protocole de communication IP permettant l'accès au réseau NTW externe. La conversion est mise en oeuvre indépendamment de la sélection automatique effectuée par l'unité de commande U_CMD. Si la conversion est effectuée lors de la mise en oeuvre de l'invention, la phase de conversion sera postérieure à la sélection automatique, si les deuxièmes éléments de communication COM2 sont sélectionnés par l'unité de commande U_CMD.

L'unité de commande U_CMD va générer le message MSG au cours d'une étape E40, le contenu et le format de trame étant choisis en fonction de l'événement EVT détecté et des éléments de communication COM_TX, sélectionnés pour l'envoi du message.

L'émission du ou des messages MSG est effectué par l'unité de commande lors d'une étape E50.

Si les deuxièmes éléments de communication COM2 sont sélectionnés au cours de l'étape E30, le ou les messages MSG sont émis par l'unité de commande U_CMD par l'intermédiaire des deuxièmes éléments de communication COM2, et acheminés ensuite par le réseau externe NTW vers le dispositif passerelle GTW, utilisant des techniques d'adressage et de routage connues.

Le dispositif passerelle GTW peut ainsi recevoir, via les éléments de communication COM3_GTW, ce ou ces messages MSG et effectuer une conversion des messages MSG reçus dans un format conforme au troisième protocole IP, dans un format compatible avec le protocole local P1.

Les messages MSG seront ensuite transmis aux équipements électriques destinataires par le dispositif passerelle de communications GTW, conformément au protocole local P1. Ces derniers reçoivent donc les messages MSG de la même manière, quel que soit le protocole et le format d'émission utilisé par l'unité de commande U_CMD.

Il est important de noter que le format utilisé par l'unité de commande U_CMD pour communiquer par l'intermédiaire des deuxièmes éléments de communication COM2, et celui utilisé par le dispositif passerelle GTW pour communiquer par l'intermédiaire des éléments de communication COM3_GTW ne sont pas nécessairement les mêmes. L'éventuelle conversion est effectuée par le réseau externe NTW, selon des modalités connues.

De façon générale, une sélection automatique est effectuée pour les éléments de communication COM_TX à utiliser pour l'envoi du message MSG à destination de l'au moins un équipement électrique, lors de l'étape E30.

Suite à l'envoi du message MSG, un ou plusieurs messages de compte-rendu MSG_STATUS, contenant des informations INF relatives au résultat de la réception du message MSG par un équipement électrique, peuvent être envoyés par les équipements électriques 11, 12, 13, 14, GTW, via les premiers éléments de communication COM1. Un tel message peut être un message d'acquittement de bonne réception du message MSG, ou un compte-rendu d'exécution des commandes applicatives envoyées par l'unité de commande U_CMD, une indication concernant l'état des équipements électriques 11, 12, 13, 14, GTW, ou encore des identifiants des équipements ou des versions logicielles et matérielles de ces équipements.

Ces messages, envoyés par les équipements électriques 11, 12, 13, 14 conformément au protocole local P1 peuvent être reçus directement par les premiers éléments de communication COM1 de l'unité de commande U_CMD, ou indirectement, par l'intermédiaire du dispositif passerelle GTW, du réseau externe NTW et des deuxièmes éléments de communication COM2. En effet, le dispositif passerelle GTW peut recevoir depuis les équipements électriques 11, 12, 13, 14, des messages conformes au protocole local P1, et les convertir ensuite dans un format compatible avec le réseau externe NTW. Ces messages seront acheminés par le réseau externe NTW vers le dispositif d'accès DA et transmis ensuite conformément au protocole distant P2, à l'unité de commande U_CMD.

Dans un mode de réalisation, les éléments de communication à utiliser pour la réception des messages de réponse sont sélectionnés lors d'une étape optionnelle E60.

Dans un mode de sélection automatique des éléments de réception, basé sur la géo-localisation de l'unité de commande U_CMD, l'étape E60 comprend des sous-étapes E61, E63, similaires aux sous-étapes E31, E33, déjà décrites.

Dans un mode de sélection automatique des éléments de réception, basé sur l'établissement d'une communication directe avec l'équipement électrique concerné, l'étape E60 comprend une sous-étape E62 d'essai de connexion utilisant le protocole local P1, en vue d'établissement d'une communication directe avec l'équipement électrique. Comme déjà décrit, l'unité de commande U_CMD émet, via les premiers éléments de communication COM1, un message explicite de requête de connexion, ou bien directement un message applicatif MSG. Ensuite, lors d'une sous-étape E64, si un message est reçu depuis l'équipement électrique 11, 12, 13, 14, GTW, par l'intermédiaire des premiers éléments de communication COM1, ces derniers seront sélectionnés par l'unité de commande pour la réception des messages ; dans le cas contraire, les deuxièmes éléments de communication COM2 seront sélectionnés.

Il est important de noter que l'étape de sélection automatique peut être effectuée indépendamment pour les éléments de communication d'émission et de réception. Ceci est particulièrement utile si la localisation de l'unité de commande (et de l'utilisateur) change entre le moment d'émission de la commande et le moment de début de l'attente du message de compte-rendu. Par exemple, dans le cas d'une unité de commande d'accès, une commande de fermeture est envoyée aux équipements électriques de sécurité, via les éléments de communication COM1, quand l'unité de commande se trouve à proximité de l'installation INST. L'utilisateur envoie cette commande en quittant le bâtiment et s'éloigne pendant le temps d'exécution de la commande ; il peut ensuite recevoir le compte rendu par l'intermédiaire des deuxièmes éléments de communication COM2, de manière transparente pour l'utilisateur.

D'autres modes de réalisation de la sélection automatique, seront maintenant décrits.

Un mode de réalisation, basé sur un essai d'établissement d'une communication directe avec l'au moins un équipement électrique, est illustré par la figure 5b. Les deuxièmes éléments de communication COM2, sont sélectionnés quel que soit le résultat de l'essai de connexion directe, auxquels s'ajoutent les premiers éléments de communication COM1, en cas de réussite de l'établissement de la communication directe.

De manière similaire, dans un autre mode de réalisation, utilisant la géo-localisation de l'unité de commande nomade U_CMD et illustré par la figure 5d, les deuxièmes éléments de communication COM2, sont sélectionnés quel que soit le résultat de la géo-localisation, auxquels s'ajoutent les premiers éléments de communication COM1, si l'unité de commande nomade U_CMD se trouve dans un périmètre PERIM prédéfini, à proximité de l'installation. Ce périmètre PERIM peut être défini par rapport à la portée des premiers moyens de communication COM1 et de la localisation du bâtiment.

Dans certains cas prédéfinis l'étape de sélection automatique consiste à sélectionner automatiquement, sans intervention de l'utilisateur sur cette sélection, les premiers et les deuxièmes éléments de communication. Ainsi l'envoi est fait par l'intermédiaire des deux éléments de communication. L'étape de sélection se trouve ainsi simplifié et la fiabilité de la communication augmentée dans certains cas. Dans ce mode de réalisation, une voie de retour systématique est assurée, au moins via les deuxièmes éléments de communication.

Le fonctionnement de l'unité de commande U_CMD, vu par un utilisateur, est le même, quels que soient les éléments de communication COM1, COM2, utilisés suite à la sélection automatique effectuée par l'unité de commande U_CMD. Avantageusement, une même action de l'utilisateur sur l'unité de commande en vue de provoquer, au niveau d'un équipement, l'exécution d'une action ou commande donnée, provoque selon des circonstances, notamment selon la localisation de l'unité de commande, l'envoi depuis l'unité de commande d'un premier message selon le premier protocole ou l'envoi depuis l'unité de commande d'un deuxième message selon le deuxième protocole. Bien que les premier et deuxième messages puissent être de formes différentes, ils ont le même sens ou la même signification. Ils traduisent tous les deux une demande d'exécution d'une action donnée ou d'une commande donnée au niveau de l'équipement.

D'autres exemples d'événements EVT pouvant être détectés par l'unité de commande U_CMD lors de l'étape E10 seront maintenant décrits.

Un tel événement EVT peut être constitué par l'arrivée à échéance d'au moins une action à exécuter conformément à un scénario prédéfini. Cet événement peut consister en une détection d'une condition remplie (température, luminosité), ou simplement une mesure du temps, grâce à une horloge interne ; cette mesure de temps sera utilisée ensuite pour l'identification des instants prédéterminés pour l'envoi des messages.

Un autre événement EVT impliquant l'envoi d'un message MSG vers les équipements électriques 11, 12, 13, 14, GTW, peut être la réception par l'intermédiaire des éléments de communication COM1, COM2, des données DATAI, DATA2 concernant le fonctionnement d'au moins un équipement électrique 11, 12, 13, 14, GTW.

Les données DATAI, DATA2, peuvent contenir des informations envoyées par des capteurs 13 de l'installation. Ces données peuvent être utilisées pour l'envoi conditionnel des messages MSG vers les équipements électriques. Par exemple, une consigne de fonctionnement spécifie la mise en route des équipements de chauffage en dessous d'une certaine température ; un capteur de l'installation envoie une information relative à la température locale vers l'unité de commande et cette dernière déduit si une commande de marche/arrêt doit être envoyée à l'équipement de chauffage. Cette fonctionnalité est disponible quel que soit l'éloignement de l'unité de commande par rapport aux équipements électriques.

Comme déjà expliqué, ces données peuvent être reçues via les premiers ou les deuxièmes éléments de communication, COM1, COM2, en fonction de la localisation de l'unité de commande, et de la portée des premiers éléments de communication COM1.

Un autre cas d'utilisation avantageuse de l'invention est la configuration des équipements électriques 11, 12, 13, 14, GTW, en cours des travaux, ou pendant une opération de maintenance. Cet exemple sera maintenant décrit en référence aux figures 3 et 4.

Dans ce mode de réalisation, l'événement EVT peut être une action spécifique exécutée par un utilisateur autorisé, par exemple par l'intermédiaire de l'interface IHM, et déclenchant l'opération de configuration des équipements électriques 11, 12, 13, 14, GTW, de l'installation INST.

Alternativement, une telle opération peut être déclenchée par la réception des données DATAI, DATA2, envoyées à l'unité de commande U_CMD par un outil de configuration, via les ports de réception Rx_COM1, Rx_COM2, des premiers ou des deuxièmes éléments de communication COM1, COM2.

Ces données DATAI, DATA2 peuvent aussi être envoyées par un équipement électrique pour provoquer une opération de configuration ou de diagnostic, par exemple dans le cas d'un résultat d'autotest défectueux, ou indiquant l'échéance d'une mise à jour préprogrammée.

L'équipement électrique utilise le protocole local P1, pour envoyer une demande de configuration ou de diagnostic ; l'unité de commande U_CMD la reçoit via les premiers éléments de communication COM1, si elle est à proximité de l'installation INST. Dans le cas contraire, la demande est reçue par la passerelle GTW et réacheminée via le réseau externe NTW ; l'unité de commande U_CMD la reçoit via les deuxièmes éléments de communication COM2.

Dans ce mode de réalisation, l'action à exécuter déterminée lors de l'étape E20 est une mise à jour (ou une initialisation) des paramètres de configuration de l'équipement électrique 11, 12, 13, 14.

L'unité de commande U_CMD peut aussi, au cours d'une opération de configuration, recevoir ses propres paramètres de fonctionnement. En effet, l'ergonomie de l'unité de commande peut être adaptée aux équipements électriques et à l'installation INST.

Dans un autre mode de réalisation, lors de l'étape E30, l'unité de commande nomade U_CMD tente d'établir une communication directe avec un dispositif passerelle de communications GTW.

Pendant la phase de mise en service de l'installation INST, le dispositif passerelle de communications GTW n'est pas présent dans l'installation, ou n'est pas encore mis en service. L'unité de commande U_CMD, située pendant la phase de mise en service au sein de l'installation INST, à portée des premiers moyens de communication COM1 sélectionne automatiquement, lors de l'étape E30, les premiers éléments de communication COM1 pour envoyer des messages vers les équipements électriques 11, 12, 13, 14, GTW.

L'unité de commande U_CMD va utiliser ses deuxièmes éléments de communication COM2 pour se connecter, via le dispositif d'accès DA et le réseau externe NTW, au serveur SERV. Ainsi, l'unité de commande U_CMD assure une fonction passerelle de communications entre les équipements électriques 11,12, 13, 14, GTW.

Alternativement, la sélection automatique peut être faite par l'unité de commande U_CMD en fonction de l'application à exécuter. Ainsi, si une opération de configuration n'est autorisée qu'au sein de l'installation INST, pour des raisons de sécurité, l'unité de commande U_CMD va sélectionner les premiers éléments de communication COM1 pour envoyer des messages vers les équipements électriques.

Nous allons décrire maintenant, en référence à la figure 4, l'étape E40 de génération du ou des messages MSG à destination des équipements électriques.

Dans une première sous-étape E42, l'unité de commande U_CMD génère un message de demande de configuration à destination du serveur distant SERV, dans un format compatible avec le protocole distant P2.

Dans une deuxième sous-étape E44, l'unité de commande U_CMD envoie le message de requête de paramètres, par l'intermédiaire des deuxièmes éléments de communication COM2, vers le serveur distant SERV, et reçoit, au cours d'une sous-étape E46 le ou les messages contenant les paramètres de configuration des équipements 11, 12, 13, 14, GTW. Comme déjà mentionné, ces deux sous-étapes, E44 et E46, sont exécutées utilisant les deuxièmes éléments de communication COM2.

Ensuite, au cours d'une sous-étape E48, les données ainsi obtenues, sont utilisées pour la génération du message MSG à destination des équipements électriques, dans un format correspondant aux éléments de communication sélectionnées COM_TX au cours de l'étape E30, dans cet exemple les premiers éléments de communication COM1.

Dans ce mode de réalisation, si un message est attendu en retour, les éléments de communication COM_RX, sélectionnés pour la réception, sont les mêmes éléments que les éléments COM_TX, sélectionnés pour l'envoi du message MSG.

Dans un autre mode de réalisation, une opération de maintenance ou de configuration peut également initiée par un utilisateur. Ce mode de réalisation peut être mis en oeuvre dans une installation INST, comprenant un dispositif d'accès dédié à l'installation, DA_INST. Ce dernier est un terminal communicant, tel un téléphone mobile, qui en plus de l'application connue de type « point d'accès », est adapté à exécuter une application spécifique à l'installation. Par exemple, lors d'un appel téléphonique effectué par un utilisateur vers les services après-vente, l'application spécifique s'exécutant sur le dispositif d'accès dédié DA_INST, établit une connexion de données entre un serveur des services après-vente et l'équipement électrique concerné. A cet effet, le dispositif d'accès DA_INST se connecte à l'unité de commande U_CMD, pour atteindre l'équipement électrique. L'unité de commande U_CMD reçoit le message d'établissement de connexion, qui constitue un événement EVT au sens de l'invention, via les deuxièmes éléments de communication COM2.

Dans un autre mode de réalisation, un dispositif d'accès DA_INST dédié à l'installation peut apporter plus de sécurité, grâce à un appairage préalable avec les équipements électriques. Il permet une optimisation des coûts, grâce à des implémentations dédiées, par exemple dans un outil portable de maintenance ou par ajout d'une application dédiée à un dispositif standard, tels qu'un téléphone mobile, une tablette multimédia ou un ordinateur. Il est à noter qu'un dispositif d'accès n'est pas nécessairement unique pour une installation.

Dans un autre mode de réalisation, des informations concernant un dispositif d'accès DA sont notifiées à l'utilisateur par des actions spécifiques exécutées par des équipements électriques 11, 12, 13, 14, GTW. Pour ce faire, le dispositif d'accès DA envoie à l'unité de commande U_CMD des données DATA2 relatives à son fonctionnement ou à son état.

La notification se fait sous la forme d'actions exécutées par des équipements électriques. Pour déclencher ces actions, l'unité de commande envoie des messages selon une correspondance prédéfinie entre les événements concernant le dispositif d'accès d'une part, et les commandes à envoyer, ainsi que les équipements destinataires de ces commandes d'une autre part.

Par exemple, si le dispositif d'accès DA est le téléphone mobile d'un utilisateur de l'installation INST, un appel entrant destiné au téléphone peut être notifié à l'utilisateur grâce à une action exécutée par un équipement électrique, par exemple l'allumage d'un équipement d'éclairage selon une séquence prédéfinie, ou par la montée ou la descente d'un store.

Les équipements électriques en charge de la notification, ainsi que les actions qu'ils doivent exécuter, sont prédéfinis en fonction des informations concernant le dispositif d'accès DA.

Ces informations sont envoyées par le dispositif d'accès DA conformément au protocole distant P2, et leur réception, via les deuxièmes éléments de communication COM2, constitue un autre exemple d'événement EVT au sens de l'invention.

Par « sélection d'élément », on entend qu'un élément est choisi pour être utilisé ultérieurement. La sélection d'un premier élément n'exclut pas nécessairement la sélection d'un deuxième élément, notamment n'exclut pas que le premier et le deuxième élément puissent être dans un état sélectionné simultanément. Ainsi, deux éléments peuvent être choisis pour être utilisés pour assurer une même tâche ou des processus complémentaires constituant une même tâche.

Les utilisations ultérieures des premier et deuxième éléments peuvent être simultanées ou décalées dans le temps.

## Revendications

1. Installation (INST) pour le contrôle automatisé des conditions de confort et/ou de sécurité dans un bâtiment, **caractérisée en ce qu'**elle comprend une unité de commande nomade (U_CMD) et au moins un équipement électrique (11, 12, 13, 14, GTW) adapté à la communication selon un premier protocole de communication (P1), dit protocole local,
l'unité de commande nomade (U_CMD) comprenant :
- des premiers éléments de communication (COM1) adaptés à la communication selon le protocole local (P1) ;
- des deuxièmes éléments de communication (COM2) adaptés à la communication selon un deuxième protocole de communication (P2), dit protocole distant, permettant l'accès vers un réseau (NTW) externe ;
- des éléments (IHM, MEM, Rx_COM2, Rx_COM1) de détection d'au moins un événement (EVT) impliquant l'envoi d'au moins un message (MSG) à destination d'au moins un équipement électrique (11, 12, 13, 14, GTW) ;
- des éléments (µP, MEM, COM1, COM2, IHM) de sélection automatique des éléments de communication (COM_TX) à utiliser pour l'envoi de l'au moins un message (MSG) ; et
- des éléments (µP, MEM, COM1, COM2) de génération de l'au moins un message (MSG) en fonction de l'événement (EVT) détecté et des éléments de communication sélectionnés (COM_TX), ledit au moins un message (MSG) étant configuré pour être reçu par ledit au moins un équipement (11, 12, 13, 14) conformément au protocole local (P1), quel que soit le protocole de communication (P1, P2) utilisé par l'unité de commande (U_CMD).

2. Installation (INST) selon la revendication 1, **caractérisée en ce que** l'unité de commande nomade (U_CMD) comprend en outre des éléments (µP, MEM) pour la détermination d'au moins une action à exécuter par l'au moins un équipement électrique (11, 12, 13, 14, GTW), en fonction de l'événement (EVT) détecté et/ou **en ce que** les éléments de sélection comprennent en outre des éléments d'interface homme-machine (IHM), permettant à un utilisateur de sélectionner des commandes à envoyer à l'au moins un équipement électrique (11, 12, 13, 14, GTW) et/ou **en ce que** les éléments de sélection comprennent en outre des éléments de géo-localisation (GEO).

3. Installation (INST) selon la revendication 1 ou la revendication 2, **caractérisée en ce qu'**elle comprend en outre un dispositif passerelle (GTW) de communication comprenant :
- des éléments (COM1_GTW) de communication adaptés au protocole local (P1) ;
- des éléments (COM3_GTW) de communication adaptés à un troisième protocole de communication (IP) permettant l'accès au réseau (NTW) externe ; et
- des éléments de conversion des données reçues conformément au troisième protocole de communication (IP) dans un format compatible avec le protocole local (P1).

4. Installation (INST) selon l'une quelconque des revendications précédentes, **caractérisée en ce qu'**elle comprend en outre un dispositif d'accès (DA) au réseau externe (NTW), adapté à communiquer avec l'unité de commande (U_CMD) selon le protocole distant (P2), où des informations concernant le dispositif d'accès (DA) sont notifiées à l'utilisateur par des actions spécifiques exécutées par des équipements électriques (11, 12, 13, 14, GTW).

5. Procédé de fonctionnement dans une installation (INST) selon l'une quelconque des revendications précédentes, le procédé étant mis en oeuvre par l'unité de commande nomade(U_CMD), et comprenant :
- une étape (E10) de détection d'au moins un événement (EVT) impliquant l'envoi d'au moins un message (MSG) à destination d'au moins un équipement électrique (11, 12, 13, 14, GTW) de l'installation (INST) ;
- une étape (E30) de sélection automatique des éléments de communication (COM_TX) à utiliser pour l'envoi de l'au moins un message (MSG) à destination de l'au moins un équipement électrique (11, 12, 13, 14, GTW) ;
- une étape (E40) de génération de l'au moins un message (MSG) en fonction de l'événement (EVT) détecté et des éléments de communication sélectionnés (COM_TX) pour l'envoi du message (MSG) ;
- une étape (E50) d'envoi de l'au moins un message (MSG) par l'intermédiaire des éléments de communication sélectionnés (COM_TX) pour l'envoi du message (MSG), ledit au moins un message (MSG) étant configuré pour être reçu par ledit au moins un équipement (11, 12, 13, 14) conformément au protocole local (P1), quel que soit le protocole de communication (P1, P2) utilisé par l'unité de commande (U_CMD).

6. Procédé de fonctionnement selon la revendication précédente, **caractérisé en ce qu'**il comprend en outre une étape (E20) de détermination d'au moins une action à exécuter par l'au moins un équipement électrique (11, 12, 13, 14, GTW), en fonction de l'événement (EVT) détecté.

7. Procédé de fonctionnement selon l'une des revendications 5 à 6, **caractérisé en ce qu'**il comprend en outre une étape (E70) de réception d'un message de compte-rendu (MSG_STATUS) contenant des informations (INF) relatives au résultat de la réception de l'au moins un message (MSG) par l'au moins un équipement électrique (11, 12, 13, 14, GTW).

8. Procédé de fonctionnement selon la revendication précédente, **caractérisé en ce qu'**il comprend en outre une étape (E60) de sélection automatique des éléments (COM_RX) de réception du message de compte-rendu (MSG_STATUS).

9. Procédé de fonctionnement selon la revendication précédente, **caractérisé en ce que** les éléments (COM_RX) de réception du message de compte-rendu (MSG_STATUS) sont les éléments (COM_TX) de communication sélectionnés pour l'envoi du message (MSG).

10. Procédé de fonctionnement selon l'une des revendications 5 à 9, **caractérisé en ce que** l'étape (E30, E60) de sélection automatique comprend une sous-étape (E32, E62) d'essai de connexion utilisant le protocole local (P1), en vue d'établissement d'une communication directe avec l'au moins un équipement électrique (11, 12, 13, 14, GTW), les éléments de communication sélectionnés (COM_TX, COM_RX) étant :
- les premiers éléments de communication (COM1) en cas de réussite de l'établissement de la communication directe ;
- les deuxièmes éléments de communication (COM2), en cas d'échec de l'établissement de la communication directe,
ou **en ce que** l'étape (E30, E60) de sélection automatique comprend une sous-étape (E31, E61) de géo-localisation de l'unité de commande nomade (U_CMD), les éléments de communication sélectionnés (COM_TX, COM_RX) étant :
- les premiers éléments de communication (COM1) si l'unité de commande (U_CMD) est localisée dans un périmètre (PERIM) prédéfini ;
- les deuxièmes éléments de communication (COM2) dans le cas contraire,
et/ou **caractérisé en ce que** l'étape (E10) de détection de l'au moins un événement (EVT) comprend la détection d'au moins une action utilisateur exécutée par l'intermédiaire d'une interface homme-machine (IHM).

11. Procédé de fonctionnement selon l'une des revendications 5 à 10 **caractérisé en ce que** l'étape (E10) de détection de l'au moins un événement (EVT) comprend la détection de l'arrivée à échéance d'au moins une action à exécuter conformément à un scénario prédéfini.

12. Procédé de fonctionnement selon l'une des revendications 5 à 11 **caractérisé en ce que** l'étape (E10) de détection de l'au moins un événement (EVT) comprend la réception par l'intermédiaire des éléments de communication (COM1, COM2), des données (DATA1, DATA2) concernant le fonctionnement d'au moins un équipement électrique (11, 12, 13, 14, GTW).

13. Procédé de fonctionnement selon la revendication précédente, **caractérisé en ce que** les données (DATA2) sont reçues par l'intermédiaire des deuxièmes éléments de communication (COM2), **en ce qu'**elles sont relatives à un dispositif (DA) permettant l'accès vers le réseau (NTW) externe et **en ce que** le message (MSG) contient une commande pour déclencher une action de l'équipement électrique (11, 12, 13, 14, GTW), en fonction des données (DATA2) reçues.

14. Procédé de fonctionnement selon l'une des revendications 5 à 13, **caractérisé en ce que** :
- l'action à exécuter par l'au moins un équipement électrique (11, 12, 13, 14, GTW) consiste à actualiser ses paramètres de configuration ; et **en ce que**
- le procédé mis en oeuvre par l'unité de commande (U_CMD), comprend en outre :
▪ une étape (E42) de génération d'un message (MSG_REQ_PAR) de requête de paramètres de configuration, à destination d'un serveur distant (SERV), dans un format compatible avec le protocole distant (P2) ;
▪ une étape (E44) de transmission du message (MSG_REQ_PAR) de requête par l'intermédiaire des deuxièmes éléments de communication (COM2) ;
▪ une étape (E46) de réception depuis le serveur distant (SERV) d'un message (PAR_CFG) contenant des paramètres de configuration, par l'intermédiaire des deuxièmes éléments de communication (COM2) ; et
▪ une étape (E48) de conversion du contenu du message (PAR_CFG) reçu conformément au protocole distant(P2) dans un message (MSG_RSP_PAR) de réponse compatible avec le protocole local (P1).

## Patentansprüche

1. Anlage (INST) für die automatisierte Steuerung der Komfort- und/oder Sicherheitsbedingungen in einem Gebäude, **dadurch gekennzeichnet, dass** sie eine mobile Steuerungseinheit (U_CMD) und mindestens eine elektrische Ausrüstung (11, 12, 13, 14, GTW), die für die Kommunikation entsprechend einem ersten Kommunikationsprotokoll (P1) geeignet ist, das als lokales Protokoll bezeichnet wird, umfasst,
die mobile Steuerungseinheit (U_CMD) umfassend:
- erste Kommunikationselemente (COM1), die für die Kommunikation entsprechend dem Lokalen Protokoll (P1) geeignet sind;
- zweite Kommunikationselemente (COM2), die für die Kommunikation entsprechend einem zweiten Kommunikationsprotokoll (P2) geeignet sind, das als entferntes Protokoll bezeichnet wird, das den Zugriff zu einem externen Netzwerk (NTW) gestattet;
- Elemente (IHM, MEM, Rx_COM2, Rx_COM1) zum Detektieren mindestens eines Ereignisses (EVT), welches das Senden mindestens einer Nachricht (MSG) an mindestens eine elektrische Ausrüstung (11, 12, 13, 14, GTW) impliziert;
- Elemente (µP, MEM, COM1, COM2, IHM) zum automatischen Auswählen der Kommunikationselemente (COM_TX), die zum Senden der mindestens einen Nachricht (MSG) zu nutzen sind; und
- Elemente (µP, MEM, COM1, COM2) zum Erzeugen der mindestens einen Nachricht (MSG) in Abhängigkeit von dem detektierten Ereignis (EVT) und den ausgewählten Kommunikationselementen (COM_TX), wobei die mindestens eine Nachricht (MSG) dafür ausgelegt ist, von der mindestens einen Ausrüstung (11, 12, 13, 14) entsprechend dem lokalen Protokoll (P1) empfangen zu werden, ganz gleich, welches Kommunikationsprotokoll (P1, P2) von der Steuerungseinheit (U_CMD) genutzt wird.

2. Anlage (INST) nach Anspruch 1, **dadurch gekennzeichnet, dass** die mobile Steuerungseinheit (U_CMD) ferner Elemente (µP, MEM) zum Bestimmen mindestens einer Aktion umfasst, die von der mindestens einen elektrischen Ausrüstung (11, 12, 13, 14, GTW) in Abhängigkeit von dem detektierten Ereignis (EVT) auszuführen ist, und/oder dadurch, dass die Elemente zum Auswählen ferner Elemente einer Mensch-Maschine-Schnittstelle (IHM) umfassen, die es einem Benutzer gestatten, Befehle auszuwählen, die an die mindestens eine elektrische Ausrüstung (11, 12, 13, 14, GTW) zu senden sind, und/oder dadurch, dass die Elemente zum Auswählen ferner Elemente zur Geolokalisierung (GEO) umfassen.

3. Anlage (INST) nach Anspruch 1 oder 2, **dadurch gekennzeichnet, dass** sie ferner eine Gateway-Vorrichtung (GTW) für Kommunikationen umfasst, die Folgendes umfasst:
- Kommunikationselemente (COM1_GTW), die an das lokale Protokoll (P1) angepasst sind;
- Kommunikationselemente (COM3_GTW), die an ein drittes Kommunikationsprotokoll (IP) angepasst sind, die den Zugriff auf das externe Netzwerk (NTW) gestatten; und
- Elemente zum Umwandeln der Daten, die entsprechend dem dritten Kommunikationsprotokoll (IP) empfangen werden, in ein Format, das mit dem lokalen Protokoll (P1) kompatibel ist.

4. Anlage (INST) nach einem der vorhergehenden Ansprüche, **dadurch gekennzeichnet, dass** sie ferner eine Vorrichtung zum Zugriff (DA) auf das externe Netzwerk (NTW) umfasst, die geeignet ist, mit der Steuerungseinheit (U_CMD) entsprechend dem entfernten Protokoll (P2) zu kommunizieren, wo Informationen hinsichtlich der Vorrichtung zum Zugriff (DA) durch bestimmte Aktionen, die von elektrischen Ausrüstungen (11, 12, 13, 14, GTW) ausgeführt werden, dem Benutzer mitgeteilt werden.

5. Betriebsverfahren in einer Anlage (INST) nach einem der vorhergehenden Ansprüche, wobei das Verfahren von der mobilen Steuerungseinheit (U_CMD) umgesetzt wird und Folgendes umfasst:
- einen Schritt (E10) des Detektierens mindestens eines Ereignisses (EVT), welches das Senden mindestens einer Nachricht (MSG) an mindestens eine elektrische Ausrüstung (11, 12, 13, 14, GTW) der Anlage (INST) impliziert;
- einen Schritt (E30) des automatischen Auswählens der Kommunikationselemente (COM_TX), die zum Senden der mindestens einen Nachricht (MSG) an die mindestens eine elektrische Ausrüstung (11, 12, 13, 14, GTW) zu nutzen sind;
- einen Schritt (E40) des Erzeugens der mindestens einen Nachricht (MSG) in Abhängigkeit von dem detektierten Ereignis (EVT) und der zum Senden der Nachricht (MSG) ausgewählten Kommunikationselemente (COM_TX) ;
- einen Schritt (E50) des Sendens der mindestens einen Nachricht (MSG) mithilfe der zum Senden der Nachricht (MSG) ausgewählten Kommunikationselemente (COM_TX), wobei die mindestens eine Nachricht (MSG) dafür ausgelegt ist, von der mindestens einen Ausrüstung (11, 12, 13, 14) entsprechend dem lokalen Protokoll (P1) empfangen zu werden, ganz gleich, welches Kommunikationsprotokoll (P1, P2) von der Steuerungseinheit (U_CMD) genutzt wird.

6. Betriebsverfahren nach dem vorhergehenden Anspruch, **dadurch gekennzeichnet, dass** es ferner einen Schritt (E20) des Bestimmens mindestens einer Aktion umfasst, die von der mindestens einen elektrischen Ausrüstung (11, 12, 13, 14, GTW) in Abhängigkeit von dem detektierten Ereignis (EVT) auszuführen ist.

7. Betriebsverfahren nach einem der Ansprüche 5 bis 6, **dadurch gekennzeichnet, dass** es ferner einen Schritt (E70) des Empfangens einer Berichtsnachricht (MSG_STATUS) umfasst, die Informationen (INF) hinsichtlich des Ergebnisses des Empfangens der mindestens einen Nachricht (MSG) von der mindestens einen elektrischen Ausrüstung (11, 12, 13, 14, GTW) enthält.

8. Betriebsverfahren nach dem vorhergehenden Anspruch, **dadurch gekennzeichnet, dass** es ferner einen Schritt (E60) des automatischen Auswählens der Empfangselemente (COM_RX) der Berichtsnachricht (MSG_STATUS) umfasst.

9. Betriebsverfahren nach dem vorhergehenden Anspruch, **dadurch gekennzeichnet, dass** die Empfangselemente (COM_RX) der Berichtsnachricht (MSG_STATUS) die Kommunikationselemente (COM_TX) sind, die zum Senden der Nachricht (MSG) ausgewählt werden.

10. Betriebsverfahren nach einem der Ansprüche 5 bis 9, **dadurch gekennzeichnet, dass** der Schritt (E30, E60) des automatischen Auswählens einen Unterschritt (E32, E62) des Testens einer Verbindung mithilfe des lokalen Protokolls (P1) im Hinblick auf die Herstellung einer direkten Kommunikation mit der mindestens einen elektrischen Ausrüstung (11, 12, 13, 14, GTW) umfasst, wobei die ausgewählten Kommunikationselemente (COM_TX, COM_RX) Folgende sind:
- die ersten Kommunikationselemente (COM1) im Falle einer erfolgreichen Herstellung der direkten Kommunikation;
- die zweiten Kommunikationselemente (COM2) im Falle einer fehlgeschlagenen Herstellung der direkten Kommunikation,
oder dadurch, dass der Schritt (E30, E60) des automatischen Auswählens einen Unterschritt (E31, E61) der Geolokalisierung der mobilen Steuerungseinheit (U_CMD) umfasst, wobei die ausgewählten Kommunikationselemente (COM_TX, COM_RX) Folgende sind:
- die ersten Kommunikationselemente (COM1), wenn die Steuerungseinheit (U_CMD) in einem vorgegebenen Perimeter (PERIM) lokalisiert ist;
- die zweiten Kommunikationselemente (COM2) im gegenteiligen Fall,
und/oder **dadurch gekennzeichnet, dass** der Schritt (E10) des Detektierens des mindestens einen Ergebnisses (EVT) das Detektieren mindestens einer Benutzeraktion umfasst, die mithilfe einer Mensch-Maschine-Schnittstelle (IHM) ausgeführt wird.

11. Betriebsverfahren nach einem der Ansprüche 5 bis 10, **dadurch gekennzeichnet, dass** der Schritt (E10) des Detektierens des mindestens einen Ereignisses (EVT) das Detektieren des Auslaufens mindestens einer Aktion umfasst, die entsprechend einem vorgegebenen Szenario auszuführen ist.

12. Betriebsverfahren nach einem der Ansprüche 5 bis 11, **dadurch gekennzeichnet, dass** der Schritt (E10) des Detektierens des mindestens einen Ereignisses (EVT) das Empfangen, mithilfe der Kommunikationselemente (COM1, COM2), der Daten (DATA1, DATA2) hinsichtlich des Betriebs mindestens einer elektrischen Ausrüstung (11, 12, 13, 14, GTW) umfasst.

13. Betriebsverfahren nach dem vorhergehenden Anspruch, **dadurch gekennzeichnet, dass** die Daten (DATA2) mithilfe der zweiten Kommunikationselemente (COM2) empfangen werden, dadurch, dass sie sich auf eine Vorrichtung (DA) beziehen, die den Zugriff zum externen Netzwerk (NTW) gestattet, und dadurch, dass die Nachricht (MSG) einen Befehl zum Auslösen einer Aktion der elektrischen Ausrüstung (11, 12, 13, 14, GTW) in Abhängigkeit von den empfangenen Daten (DATA2) enthält.

14. Betriebsverfahren nach einem der Ansprüche 5 bis 13, **dadurch gekennzeichnet, dass**:
- die Aktion, die von der mindestens einen elektrischen Ausrüstung (11, 12, 13, 14, GTW) auszuführen ist, darin besteht, ihre Konfigurationsparameter zu aktualisieren; und dadurch, dass
- das Verfahren, das von der Steuerungseinheit (U_CMD) umgesetzt wird, ferner Folgendes umfasst:
▪ einen Schritt (E42) des Erzeugens einer Nachricht (MSG_REQ_PAR) zur Anforderung von Konfigurationsparametern an einen entfernten Server (SERV) in einem Format, das mit dem entfernten Protokoll (P2) kompatibel ist;
▪ einen Schritt (E44) des Übertragens der Nachricht (MSG_REQ_PAR) zur Anforderung mithilfe der zweiten Kommunikationselemente (COM2);
▪ einen Schritt (E46) des Empfangens, von dem entfernten Server (SERV), einer Nachricht (PAR_CFG), die Konfigurationsparameter enthält, mithilfe der zweiten Kommunikationselemente (COM2); und
▪ einen Schritt (E48) des Umwandelns des Inhalts der Nachricht (PAR_CFG), die entsprechend dem entfernten Protokoll (P2) empfangen wird, in eine Antwortnachricht (MSG_RSP_PAR), die mit dem lokalen Protokoll (P1) kompatibel ist.

## Claims

1. Installation (INST) for the automated control of the comfort and/or security conditions in a building, **characterised in that** it comprises a mobile control unit (U_CMD) and at least one electrical equipment item (11, 12, 13, 14, GTW) adapted for communication according to a first communication protocol (P1), called local protocol, the mobile control unit (U_CMD) comprising:
- first communication elements (COM1) adapted for communication according to the local protocol (P1) ;
- second communication elements (COM2) adapted for communication according to a second communication protocol (P2), called remote protocol, allowing access to an external network (NTW);
- elements (IHM, MEM, Rx_COM2, Rx_COM1) for detecting at least one event (EVT) involving the sending of at least one message (MSG) to at least one electrical equipment item (11, 12, 13, 14, GTW);
- elements (µP, MEM, COM1, COM2, IHM) for automatically selecting the communication elements (COM_TX) to be used for the sending of the at least one message (MSG); and
- elements (µP, MEM, COM1, COM2) for generating the at least one message (MSG) according to the event (EVT) detected and the selected communication elements (COM_TX), said at least one message (MSG) being configured to be received by said at least one equipment item (11, 12, 13, 14) in accordance with the local protocol (P1), regardless of the communication protocol (P1, P2) used by the control unit (U_CMD).

2. Installation (INST) according to Claim 1, **characterised in that** the mobile control unit (U_CMD) further comprises elements (µP, MEM) for determining at least one action to be executed by the at least one electrical equipment item (11, 12, 13, 14, GTW), according to the event (EVT) detected and/or **in that** the selection elements further comprise human-machine interface elements (IHM), making it possible for a user to select commands to be sent to the at least one electrical equipment item (11, 12, 13, 14, GTW) and/or **in that** the selection elements further comprise geolocation elements (GEO).

3. Installation (INST) according to claim 1 or 2, **characterised in that** it further comprises a communication gateway device (GTW) comprising:
- communication elements (COM1_GTW) adapted to the local protocol (P1) ;
- communication elements (COM3_GTW) adapted to a third communication protocol (IP) allowing access to the external network (NTW); and
- elements for converting the data received in accordance with the third communication protocol (IP) into a format compatible with the local protocol (P1).

4. Installation (INST) according to one of the preceding claims, **characterised in that** it further comprises a device (DA) for accessing the external network (NTW), adapted to communicate with the control unit (U_CMD) according to the remote protocol (P2), where information concerning the access device (DA) is notified to the user through specific actions executed by electrical equipment items (11, 12, 13, 14, GTW).

5. Operating method in an installation (INST) according to one of the preceding claims, the method being implemented by the mobile control unit (U_CMD), and comprising:
- a step (E10) of detecting at least one event (EVT) involving the sending of at least one message (MSG) to at least one electrical equipment item (11, 12, 13, 14, GTW) of the installation (INST);
- a step (E30) of automatically selecting the communication elements (COM_TX) to be used for the sending of the at least one message (MSG) to the at least one electrical equipment item (11, 12, 13, 14, GTW);
- a step (E40) of generating the at least one message (MSG) according to the event (EVT) detected and the communication elements (COM_TX) selected for the sending of the message (MSG);
- a step (E50) of sending the at least one message (MSG) via the communication elements (COM_TX) selected for the sending of the message (MSG), said at least one message (MSG) being configured to be received by said at least one equipment item (11, 12, 13, 14) in accordance with the local protocol (P1), regardless of the communication protocol (P1, P2) used by the control unit (U_CMD).

6. Operating method according to the preceding claim, **characterised in that** it further comprises a step (E20) of determining at least one action to be executed by the at least one electrical equipment item (11, 12, 13, 14, GTW), according to the event (EVT) detected.

7. Operating method according to one of Claims 5 or 6, **characterised in that** it further comprises a step (E70) of receiving a report message (MSG_STATUS) containing information (INF) relating to the result of the reception of the at least one message (MSG) by the at least one electrical equipment item (11, 12, 13, 14, GTW).

8. Operating method according to the preceding claim, **characterised in that** it further comprises a step (E60) of automatically selecting the elements (COM_RX) for receiving the report message (MSG_STATUS).

9. Operating method according to the preceding claim, **characterised in that** the elements (COM_RX) for receiving the report message (MSG_STATUS) are the communication elements (COM_TX) selected for the sending of the message (MSG).

10. Operating method according to one of Claims 5 to 9, **characterised in that** the step (E30, E60) of automatic selection comprises a sub-step (E32, E62) of testing the connection using the local protocol (P1), in order to set up a direct communication with the at least one electrical equipment item (11, 12, 13, 14, GTW), the selected communication elements (COM_TX, COM_RX) being:
- the first communication elements (COM1) in the case of successful establishment of the direct communication;
- the second communication elements (COM2), in the case of failure to establish the direct communication,
or **in that** the step (E30, E60) of automatic selection comprises a sub-step (E31, E61) of geolocation of the mobile control unit (U_CMD), the selected communication elements (COM_TX, COM_RX) being:
- the first communication elements (COM1) if the control unit (U_CMD) is located within a predefined perimeter (PERIM);
- the second communication elements (COM2) otherwise, and/or **characterised in that** the step (E10) of detecting the at least one event (EVT) comprises the detection of at least one user action executed via a human-machine interface (IHM).

11. Operating method according to one of Claims 5 to 10, **characterised in that** the step (E10) of detecting the at least one event (EVT) comprises the detection of the timing-out of at least one action to be executed in accordance with a predefined scenario.

12. Operating method according to one of Claims 5 to 11, **characterised in that** the step (E10) of detecting the at least one event (EVT) comprises the reception, via the communication elements (COM1, COM2), of the data (DATA1, DATA2) concerning the operation of at least one electrical equipment item (11, 12, 13, 14, GTW).

13. Operating method according to the preceding claim, **characterised in that** the data (DATA2) are received via the second communication elements (COM2), **in that** they relate to a device (DA) allowing access to the external network (NTW) and **in that** the message (MSG) contains a command to trigger an action of the electrical equipment item (11, 12, 13, 14, GTW), according to the data (DATA2) received.

14. Operating method according to one of Claims 5 to 13, **characterised in that**:
- the action to be executed by the at least one electrical equipment item (11, 12, 13, 14, GTW) consists in updating its configuration parameters; and **in that**
- the method implemented by the control unit (U_CMD), further comprises:
▪ a step (E42) of generating a message (MSG_REQ_PAR) requesting configuration parameters, to a remote server (SERV), in a format compatible with the remote protocol (P2);
▪ a step (E44) of transmitting the request message (MSG_REQ_PAR) via the second communication elements (COM2);
▪ a step (E46) of receiving, from the remote server (SERV), a message (PAR_CFG) containing configuration parameters, via the second communication elements (COM2); and
▪ a step (E48) of converting the content of the message (PAR_CFG) received in accordance with the remote protocol (P2) into a response message (MSG_RSP_PAR) compatible with the local protocol (P1) .
